(19) Europäisches Patentamt
European Patent Office
Office européen des brevets

(11) Publication number: **0 365 504**
**A2**

## (12) EUROPEAN PATENT APPLICATION

(21) Application number: 89850349.5

(22) Date of filing: 13.10.89

(51) Int. Cl.⁵: **H01M 10/42 , H01M 16/00**

(30) Priority: 20.10.88 FI 884835

(43) Date of publication of application:
**25.04.90 Bulletin 90/17**

(84) Designated Contracting States:
**AT BE CH DE ES FR GB GR IT LI LU NL SE**

(71) Applicant: **Partanen, Rainer**
**Palovartijantie 6 A 71**
**SF-00750 Helsinki(FI)**

(72) Inventor: **Partanen, Rainer**
**Palovartijantie 6 A 71**
**SF-00750 Helsinki(FI)**

(74) Representative: **Mossmark, Anders et al**
**Albihn West AB Box 142**
**S-401 22 Göteborg(SE)**

(54) **Set of electric cells.**

(57) The invention concerns a set of electric cells used to generate an electric current for supply into a load (12). The set comprises a battery (1), e.g. a NiFe battery, provided with terminals (2,3), which is used to activate an auxiliary cell (4) connected to the set and mounted on a stand (8) so that it can be turned about on its trunnions (15) to allow an electrolyte (9) to flow into the spaces (14) between the electrode plates of the cell so as to set up a current to feed the load. The current is interrupted by turning the cell back to its original position. The anode and cathode (7/5) electrodes are made of a metal containing or consisting of magnesium. The electrode plates can be replaced by pulling them out of the frame (16).

Fig. 1

EP 0 365 504 A2

## SET OF ELECTRIC CELLS

The present invention relates to a set of electric cells, comprising a current-producing battery provided with terminals and connected to a load consuming current.

It is generally known that chemical cells are divided into two categories.
Galvanic cells = cells producing electric current
Electrolytic cells = cells consuming electric current

Galvanic batteries, which have the drawbacks of low power and heavy weight.

The object of the present invention is to create a set of electric cells comprising at least one battery of a basically normal construction, a set which makes it possible to achieve a higher level of electric power and is lighter in construction than currently used batteries or battery systems. The invention is characterized in that it comprises an auxiliary cell having electrode plates in its upper part and an electrolyte in the lower part, said auxiliary cell being activated by a current supplied by the battery. When the auxiliary cell is rotated on its trunnions, the electrolyte in the lower part of the container flows into the part housing the electrode plates and the cell starts operating. A current is immediately set up and a rise of potential occurs. The current is interrupted by turning the auxiliary cell back to the original position.

In the case of galvanic cells, the technique of connecting several cells or batteries in parallel or in series is in itself known in prior art.

It is more important to give a description of the auxiliary cell as such, since it does not belong to either of the pre viously known categories. The auxiliary cell does not work at all without an external current source. If one tries to turn the electrode plates down so that the electrolyte flows into the spaces between the plates, the only effect is that the electrode plates are discharged uselessly.

A new feature is that two cells of unequal status are connected together, the auxiliary cell being neutral but still capable of operating in a direction determined by the current from the external battery.

The electrolyte has the special property that it is the reducible party regardless of the direction of the current generated by the cell. The electrolyte is at the + potential of the auxiliary cell, and when reduction occurs, the magnitude of the ionic charge is changed.

In particular, the invention makes it possible to use auxiliary cell electrodes that are all made of the same metal, being partly or wholly made of magnesium, each electrode acting simultaneously both as anode and cathode, except for the first and last electrodes in the group. In addition, when the electrode plates are worn out, they, being mounted inside a tight frame, can be replaced with new ones by pulling them out from the side on which the electrolyte filling caps are located. The electrode plates are in contact with the electrolyte only when current is being drawn out of the set of cells. Using the materials mentioned, a light weight of the set of cells and a high cell potential are achieved.

Since the electrode plate can act both as anode and cathode and may be either, it will be called an anode-cathode.

The set of electric cells of the invention is applicable as a power source in an electric vehicle.

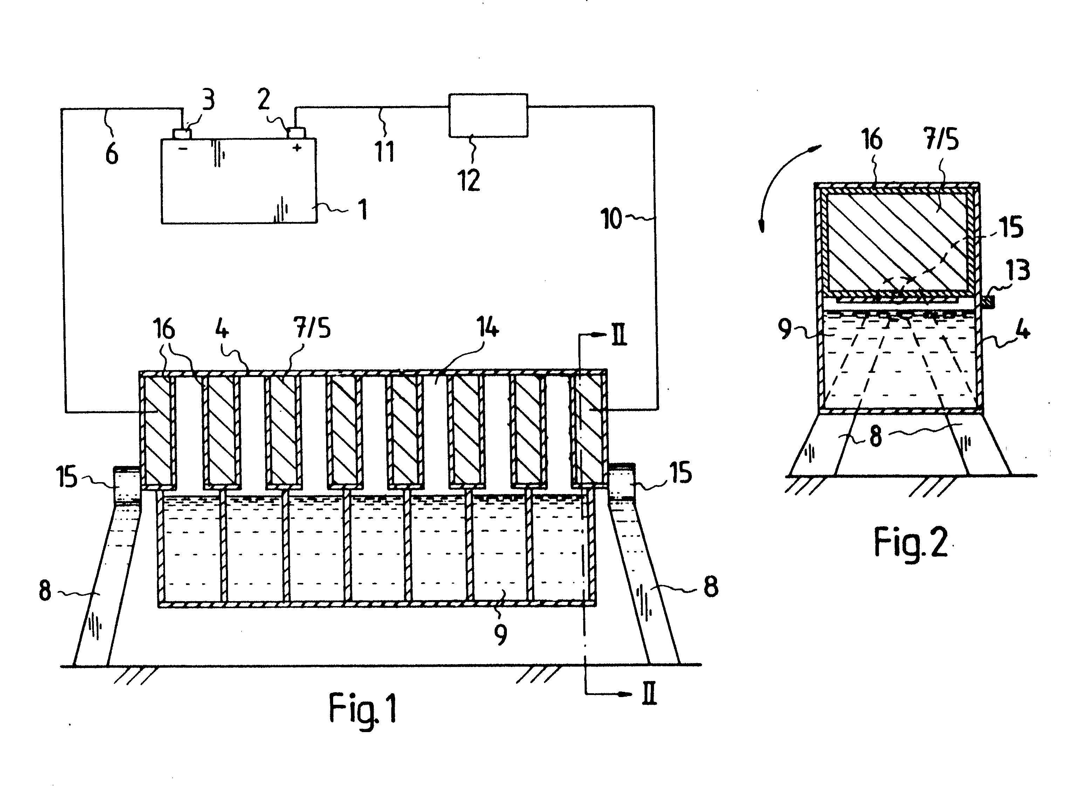

In the following, the invention is described in greater detail by the aid of an example with reference to the drawing appended, representing an embodiment of the set of electric cells of the invention, consisting of a battery and an auxiliary cell.

The battery in the set of cells described is a NiFe battery 1, having a positive terminal 2 and a negative terminal 3.

On the side of the former, the reaction is
$$Ni_2O_3 + 3H_2O + 2e^- \rightarrow 2Ni(OH)_2 + 2OH^-$$
and on the side of the latter
$$Fe + 2OH^- \rightarrow Fe(OH)_2 + 2e$$

The electrolyte in the battery 1 is preferably a strong solution of KOH.

Fig.I:

The battery 1 is connected to the auxiliary cell 4, whose cathode plate 5 is connected by conductor 6 to the negative terminal 3 of the battery 1 and anode plate 7 by conductor 10 to the load 12, which in turn is connected by conductor 11 to the positive terminal 2 of the battery 1. All the electrode plates, i.e. the anode 7, the cathode 5 and the anode-cathodes 7/5, are made of magnesium. The plates are mounted in a frame 16. The lower part of the auxiliary cell is occupied by an electrolyte 9, which consists of a suitable water solution having its own potential. In the example, the solution is KOH + potassium tetraoxoferrate.

The bi-directional arrow in Fig. II indicates that the auxiliary cell 4, mounted on a stand 8, can be turned about on its trunnions 15.

The reaction occurring on the anode side of the auxiliary cell is
$$2Mg^{2+} + 4e \leftarrow Mg(s)$$
and the reaction occurring on the cathode side is
$$Mg(s)/ K_2FeO_4 + 2H_2O + 4e^- \rightarrow K_2FeO_2 + 4OH^-$$

Figs. I and II:

In the situation depicted in the drawing, the electrode plates are above the electrolyte 9 and the set of cells is not in operation. The set will start generating high-power electricity when the auxiliary cell 4 is rotated through a quarter of a turn on its trunnions 15 so that, after the turning, the side with the electrolyte filling caps 13 faces upward. The electrolyte 9 will now flow into the spaces 14 between the electrode plates and an electric current is immediately set up.

It is obvious to a person skilled in the art that different embodiments of the invention are not restricted to the example described above, but that they may instead be varied within the scope of the following claims. Thus, for instance, the set of cells may comprise a larger number of batteries and/or auxiliary cells connected to each other so as to provide a larger current or higher voltage and power. Also, the electrolyte composition and the material used in the electrode plates of the auxiliary cell may differ from those presented in the example.

**Claims**

1. Set of electric cells, comprising a current-generating battery (1) provided with terminals (2,3) and conncected to a load (12) consuming current, **characterized** in that an auxiliary cell (4) connected to the set is activated by a current supplied by the battery (1), the upper part of said auxiliary cell housing several electrode plates acting as anode-cathodes (7/5) while the lower part contains an electrolyte (9) which has its own potential and flows into the spaces (14) between the electrode plates when the auxiliary cell (4), mounted on a stand (8), is turned about on its trunnions (15), whereby a current, supplied to the load (12), is set up, said current being interrupted by turning the cell back to the original position.

2. Set of electric cells according to claim 1, **characterized** in that the electrode plates (7/5) can be replaced by pulling them out of their mounting frame (16).

3. Set of electric cells according to claim 2, **characterized** in that the auxiliary cell (4) heightens the potential power of the external starting current.

Fig.2

Fig.1